(19) Europäisches Patentamt / European Patent Office / Office européen des brevets

(11) **EP 4 108 713 A1**

(12) **EUROPEAN PATENT APPLICATION**

(43) Date of publication:
**28.12.2022 Bulletin 2022/52**

(21) Application number: **21181078.3**

(22) Date of filing: **23.06.2021**

(51) International Patent Classification (IPC):
**C08J 5/24** (2006.01)  **C08K 5/06** (2006.01)
**B32B 27/00** (2006.01)  **C08J 5/04** (2006.01)
**B32B 5/28** (2006.01)  **B32B 5/26** (2006.01)

(52) Cooperative Patent Classification (CPC):
**C08J 5/042; B32B 5/26; B32B 27/00; C08J 5/24;
C08J 5/243; C08J 5/249; C08L 71/00; C08L 81/02;
C08L 81/06;** C08J 2365/00; C08J 2371/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Toray Advanced Composites
7443 RE Nijverdal (NL)**

(72) Inventors:
• **SLANGE, Tjitse
7443 RE Nijverdal (NL)**
• **HENDRIKSEN, Sander, G.
7443 RE Nijverdal (NL)**

(74) Representative: **Kador & Partner PartG mbB
Corneliusstraße 15
80469 München (DE)**

(54) **PREPREG WITH LOW VOLATILE CONTENT**

(57)     The present invention concerns a prepreg comprising fibers impregnated with a thermoplastic polymer, the prepreg characterized by a volatile content of 0.05% or less.

Figure 2

EP 4 108 713 A1

**Description**

The present invention relates to a prepreg having a low volatile content, to a process for consolidation of a stack of multiple prepreg plies into a composite laminate, a composite laminate obtained by the process and the use of a prepreg having a low volatile content.

Prepregs comprising fibers, such as carbon or glass fibers, impregnated with thermoplastic polymers are known in the art. In particular, the aerospace industry uses polyaryletherketones (PAEK), such as polyetheretherketone (PEEK) or poly-ether-diphenyl-ether-ketone (PEDEK), as the thermoplastic polymer with which the fibers, usually carbon fibers, are impregnated to form a thermoplastic prepreg. Impregnation of the fibers usually takes place in slurry bath comprising water, volatile compound(s), such as surfactants, and particles of the thermoplastic polymer.

The use of thermoplastic prepregs as well as consolidated composites for e.g. aerospace parts that have previously been made of metal not only leads to materials having improved mechanical properties but also to weight savings, in particular on airplanes. The latter, in turn, leads to environmental benefits such as less fuel consumption and $CO_2$ emissions of airplanes.

Many industrial applications rely on the use of an autoclave for consolidation, which can be, however, expensive especially for large parts such as a wing skin or fuselage panel. Developments are ongoing for processes that do not require autoclaves, i.e. Out-of-Autoclave (OoA) processes. Out-of-autoclave processing can be used to consolidate thermoplastic prepregs to obtain composites or composite laminates. Among the OoA technologies, consolidation by hot plate press is well established. Other OoA processes targeting low consolidation pressure are under development, for example using a vacuum bag for low pressure consolidation with a convection oven or a hot plate as heat source.

However, out-of-autoclave (OoA) processing not always leads to composites or composite laminates having the desired quality, such as a desired low porosity or even void free. Problems with porosity are in particular observed for thicker composites. Voids are commonly present throughout the entire thickness of the laminate or may be concentrated near the midplane. Voids in composites or composite laminates are known to cause mechanical failures.

It is an object of the invention to overcome the above-mentioned disadvantages.

It is an object of the invention to provide a composite or composite laminate having improved quality, in particular low porosity.

It is a further object of the invention to provide a fast and robust process for low pressure consolidation of a stack of multiple prepreg plies into a high-quality composite laminate.

It is still a further object of the invention to provide a prepreg for the manufacture of a composite or a composite laminate having improved quality, in particular low porosity.

In the present invention, it has been surprisingly found that the volatile content of a prepreg has a significant influence on the subsequent low pressure consolidation process of the prepreg and thus the quality of the obtained composite or composite laminate. A prepreg having a low volatile content as disclosed herein surprisingly leads to a composite or composite laminate having improved quality, in particular low porosity. In other words, the removal of volatile compounds from a prepreg prior to its consolidation improves the quality of the obtained composite or composite laminate.

The present invention is further based on the finding that a composite or composite laminate having improved quality, in particular low porosity, can be obtained by consolidation of prepreg plies having a low volatile content being conducted at a temperature above the melting temperature of the thermoplastic polymer of the prepreg and at a low pressure.

The invention thus provides a prepreg comprising fibers impregnated with a thermoplastic polymer, the prepreg characterized by a volatile content of 0.05% or less.

The volatile content is measured as described below. The volatile content characterizes the amount of the volatile compound in the prepreg. The volatile compound may be a single compound or a mixture of two or more different compounds.

As used herein a compound is a "volatile compound" if it evaporates up to Tm +100 °C under atmospheric pressure (1 bar), wherein Tm is the melting temperature of the thermoplastic polymer. For example, water is such a "volatile compound".

Preferably the volatile content is 0.04% or less, or more preferably of 0.03% or less. The term "low volatile content" as used herein denotes a volatile content of 0.05% or less, 0.04% or less, or 0.03% or less.

The prepreg according to the invention has a number of surprising advantages. During out-of-autoclave low pressure consolidation, all interlayer gaps and porosities have to be removed from a stack of multiple prepreg plies to obtain an improved quality of the composite laminate, i.e. a well consolidated composite laminate. This means that all gasses have to be removed from the stack. This includes not only air and water or moisture that is entrapped within the stack during lay-up, but also any other volatile compound(s) that are outgassing from the prepreg plies upon heating. Exemplary other volatile compounds may be additives which are added before or during the impregnation process of the fibers with the thermoplastic polymer, such as surfactants. Ideally, during out-of-autoclave processing all the porosities shall be removed to obtain a high quality, i.e. void-free, composite or composite laminate.

The prepreg according to the invention has the advantage that due to its low volatile content the amount of volatile compound(s) in the prepreg are low and, thus, the volatile compound(s) are not only quickly but also significantly, if not fully, removed from the prepreg prior to its consolidation. This is even more advantageous in case a stack comprising a high number of prepreg plies is to be consolidated.

A further advantage is improved processability of the prepreg during consolidation. Due to the low content of residual volatiles in the prepreg the out-of-autoclave cycle time during consolidation can be significantly reduced.

Still a further advantage is that the consolidation process becomes less sensitive to dwell time and temperature.

A thermoplastic polymer is used for impregnating the fibers. Preferably, the thermoplastic polymer is a polyaryletherketone (PAEK), a polyphenylene sulfide (PPS), a polyethersulfone (PES), a polycarbonate (PC) or a polyetherimide (PEI), and co-polymers thereof.

Preferably, the polyaryletherketone (PAEK) is selected from the group consisting of poly-ether-ketone (PEK), poly-ether-ether-ketone (PEEK), poly-ether-ether-ketone-ketone (PEEKK), poly-ether-ether-ketone-ketone (PEKK), poly-ether-ketone-ether-ketone-ketone (PEKEKK), poly-ether-ether-ketone-ether-ketone (PEEKEK), poly-ether-ether-ether-ketone (PEEEK), and poly-ether-diphenyl-ether-ketone (PEDEK), and poly-ether-meta-ether-ketone (PEmEK), and poly-ether-ortho-ether-ketone (PEoEK), and mixtures thereof.

Preferably, the fibers are carbon fibers, glass fibers, ceramic fibers, quartz or a mixture thereof. More preferably, the fibers are carbon fibers.

Preferably, the fibers are unidirectional fibers, more preferably the fibers are unidirectional carbon fibers.

Preferably, the prepreg according to the invention is obtained by the following process, the process comprising the steps of:

a) preparing a mixture of the thermoplastic polymer and the volatile compound,

b) impregnating the fibers with the mixture to form a prepreg,

c) removing the volatile compound from the prepreg by

c1) heating the prepreg and maintaining the temperature of the prepreg between a temperature T1 and temperature T2 for a time of at least 10 s, wherein T1 is the volatilization temperature of the volatile compound and T2 = Tm + 100 °C, wherein Tm is the melting temperature of the thermoplastic polymer, and either
melting the thermoplastic polymer during step c1), or
melting the thermoplastic polymer after step c1),

c2) solidification of the thermoplastic polymer of the prepreg by cooling.

The volatilization temperature as defined herein is the temperature at which the rate of evaporation/decomposition, i.e. the weight loss, of the volatile compound is highest during a Thermogravimetric Analysis (TGA) in $N_2$ atmosphere under atmospheric pressure (1 bar) at a heating rate of 5 °C/min.

Preferably, the thermoplastic polymer in step a) is present as particles. The particles preferably have an average particle size of 10 to 500 $\mu$m.

Preferably, the volatile compound in step a) comprises water, more preferably the volatile compound comprises water and a surfactant. The surfactant can be a single surfactant or a mixture of two or more different surfactants. Surfactants act as processing aid during the manufacture of prepregs and are known in the art. Surfactants may for example be anionic surfactants or nonionic surfactants.

Impregnation step b) is preferably performed in a slurry bath. The slurry bath comprises the mixture of step a). After impregnation of the fibers with the thermoplastic polymer a prepreg is obtained.

In step c) the volatile compound is removed from the prepreg by heating so as to obtain a prepreg having a low volatile content.

In heating step c1) the prepreg is heated to a temperature between T1 and T2. In case the volatile compound is a single volatile compound, the temperature T1 corresponds to the volatilisation temperature of this single volatile compound. However, it may be that two or more volatile compounds, differing from each other, may be present in the mixture of step a). For example, the mixture of step a) may comprise water and a surfactant as volatile compounds, or the mixture may comprise three volatile compounds, such as water and two different surfactants. In case the volatile compound is a mixture of two or more volatile compounds, then the temperature T1 is the volatilization temperature of that volatile compound which has the highest volatilization temperature among the volatile compounds present in the mixture.

Tm denotes the melting temperature of the thermoplastic polymer. In case the thermoplastic polymer is a mixture of two or more different thermoplastic polymers, then the Tm according to step c1) is the melting temperature of the thermoplastic polymer with the lowest melting temperature.

The thermoplastic polymers used herein are semi-crystalline polymers having a melting temperature Tm, except for polyetherimide. The reason is that polyetherimide is an amorphous polymer and thus does, technically speaking, not have a melting temperature Tm. Accordingly, the Tm for polyetherimides is defined as Tg + 80 °C, with Tg being the glass transition temperature of the polyetherimide.

Preferably, the time in step c1) is at least 20 s, more preferably at least 30 s and preferably at least 40 s. Preferably, the time in step c1) is not more than 10 min, preferably not more than 5 min, preferably not more than 1 min and preferably not more than 50 s.

Preferably step c1) is conducted in an oven. The oven is preferably a convection oven, a conduction oven, an induction oven, a microwave oven or an infrared oven, more preferably the oven is an infrared oven.

Preferably, the thermoplastic polymer of the prepreg is being cooled to room temperature in step c2).

The invention further provides a process for producing a prepreg, the prepreg preferably having a volatile content of 0.05% or less, the process comprising the steps of:

a) preparing a mixture of the thermoplastic polymer and the volatile compound,

b) impregnating the fibers with the mixture to form a prepreg,

c) removing the volatile compound from the prepreg by

c1) heating the prepreg and maintaining the temperature of the prepreg between a temperature T1 and temperature T2 for a time of at least 10 s, wherein T1 is the volatilization temperature of the volatile compound and T2 = Tm + 100 °C, wherein Tm is the melting temperature of the thermoplastic polymer, and either
melting the thermoplastic polymer during step c1), or
melting the thermoplastic polymer after step c1),

c2) solidification of the thermoplastic polymer of the prepreg by cooling.

All preferred embodiments of the prepreg according to the invention as described above are also preferred embodiments of the process for producing a prepreg, the prepreg preferably having a volatile content of 0.05% or less.

The present invention further provides a process for consolidation of a stack of multiple prepreg plies into a composite laminate, wherein the prepreg is a prepreg according to the invention, the process comprising the steps of a1) a dwell of the stack of prepreg plies at a pressure of 5 bar or below at a temperature T1 between (Tm + 20 °C) < T1 < (Tm + 100 °C) for a duration of at least 5 min, wherein Tm is the melting temperature of the thermoplastic polymer of the prepreg.

The dwell of step a1) is thus performed above the melting temperature of the thermoplastic polymer of the prepreg.

Preferably, the pressure in step a1) is 3 bar or below, more preferably 1 bar or below.

Preferably, the duration in step a1) is at least 10 min, more preferably at least 20 min, more preferably at least 30 min and most preferably at least 40 min. The duration in step a1) is preferably less than 80 min, more preferably less than 70 min, and most preferably less than 60 min.

It has been found that consolidation of prepregs with a low volatile content is fast once reaching the melting temperature of the thermoplastic polymer of the prepreg. A short duration slightly above the melting temperature of the thermoplastic polymer of the prepreg leads to a good consolidation quality. This is due to the low content of volatile compounds in the prepreg according to the invention. Preferably, the process according to the invention further comprising the step of
a0) a dwell of the stack of prepreg plies at a pressure of 5 bar or below at a temperature T2 between (Tm - 30 °C) < T2 < (Tm - 10 °C) for a duration of 60 min or less, wherein step a0) is conducted before step a1).

The dwell of step a0) is thus performed below the melting temperature Tm of the thermoplastic polymer of the prepreg. It has been found that a dwell a0) prior to the dwell a1) is beneficial in order to effectively remove any residual volatile compounds in the prepreg plies during laminate consolidation. At dwell step a0) gas evacuation channels between the prepreg plies are still open, thus allowing an effective removal of residual volatile compounds from the prepreg plies.

Preferably, the pressure in step a0) is 3 bar or below, more preferably 1 bar or below. Preferably, the pressure in step a0) is the same as in step a1).

The dwell of step a0) is usually at least 5 min.

Preferably, the stack of multiple prepreg plies is prepared by manual deposition or automated deposition of prepreg plies.

Preferably, step a1) and/or step a0) are conducted in a vacuum bag, more preferably both step a0) and step a1) are conducted in a vacuum bag, more preferably in the very same vacuum bag. Conducting both steps a0) and a1) in the same vacuum bag makes the consolidation process faster and more economic.

The invention further provides a composite laminate. The invention thus provides a composite laminate obtained by the process for consolidation according to the invention, the composite laminate being characterized by a porosity of less than 2 % by volume measured according to ASTM D2734-16. Preferably, the porosity is less than 1%, more preferably less than 0.5%.

The invention further provides the use of a prepreg according to the invention for lowering the void content in a composite laminate obtained by consolidation of the prepreg. All embodiments of the prepreg according to the invention are also preferred embodiments of the use of the prepreg of the invention.

As discussed above, it has been surprisingly found that using a prepreg having a low volatile content leads to a composite laminate having a reduced void content, the composite laminate being obtained by low pressure consolidation of the prepreg.

The invention will be further illustrated by the non-limiting examples below. The figures show

Figure 1 Cross-sectional micrograph of Comparative Example 1

Figure 2 Cross-sectional micrograph of Inventive Example 1

Figure 3 Cross-sectional micrograph of Comparative Example 2

Figure 4 Cross-sectional micrograph of Inventive Example 2

**EXAMPLES**

**1. Measurement Methods**

**a) Volatile content and moisture content**

The volatile content is measured based on the weight loss of a prepreg specimen during a hold at elevated temperature. The measurement procedure is performed in air at atmospheric pressure (1 bar) and includes the following steps:

1. Cut 3x 100x100mm prepreg specimen

2. Weigh initial weight W0 of each specimen

3. Thermal hold of the specimens in a preheated convection oven for 60 min at 105°C to outgas moisture

4. Remove specimens from oven and cool to room temperature in desiccator for 15 min

5. Weigh W1 of each specimen

6. Thermal hold of the specimens in preheated convection oven for 60 min at Tm - 20 °C to outgas the volatile compound(s), wherein Tm is the melting temperature of the thermoplastic polymer of the prepreg specimen

7. Remove specimens from oven and cool to room temperature in desiccator for 15 min

8. Weigh W2 of each specimen

9. Calculation of the moisture content:

$$\text{moisture content (\%)} = (W0 - W1)/W0 * 100$$

10. Calculation of the volatile content:

$$\text{volatile content } (\%) = (W1 - W2)/W0 * 100$$

**b) Porosity**

The porosity of the composite laminate is measured according to ASTM D2734-16.

**c) Melting temperature (Tm)**

The melting temperature of the thermoplastic polymer is determined according to ISO 11357-3.

**d) Glass Transition temperature (Tg)**

The glass transition temperature Tg is determined according to ISO 11357-3.

**2. Preparation and Results**

Four prepreg materials were prepared using the prepreg manufacturing process described in the invention, but with different polymer and different time for step c1, leading to different levels of volatile content. The materials, parameters for prepreg manufacturing and the resulting volatile content are listed in Table 1. Here, PAEK 1 is a co-polymer of PEEK and PEDEK and PAEK 2 is a PEKK polymer. The applied surfactant is an ethoxylated alcohol. Note that material of CE1 and CE2 can be considered non-low volatile, as the volatile content exceeds the claimed <0.05% due to the short time for c1. CE1 and CE2 are thus comparative examples.

From each of the four prepreg hand lay-up stacks were prepared. These stacks were consolidated in a vacuum bag at < 25 mbar absolute pressure using a convection oven. Heating rates were 3-5 °C/min. Table 1 shows of the prepregs, as well as parameters for laminate consolidation.

Table 1:

|  | **CE1** | **IE1** | **CE2** | **IE2** |
|---|---|---|---|---|
| **Fiber** | Carbon | Carbon | Carbon | Carbon |
| **Matrix** | PAEK 1 | PAEK 1 | PAEK 2 | PAEK 2 |
| **Volatile compounds** | Water + surfactant | Water + surfactant | Water + surfactant | Water + surfactant |
| **Time for c1** | < 5 s | 10-20 s | < 10 s | 10-20 s |
| **Volatile content** | 0.17% | 0.02% | 0.10% | 0.04% |
| **Dwell a1** | 30 min @ 350 °C | 30 min @ 350 °C | 30 min @ 375 °C | 30 min @ 375 °C |

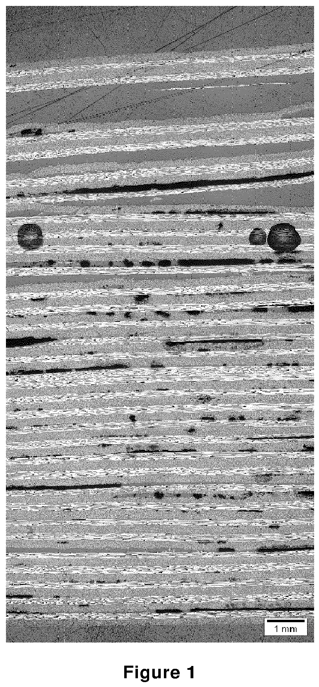

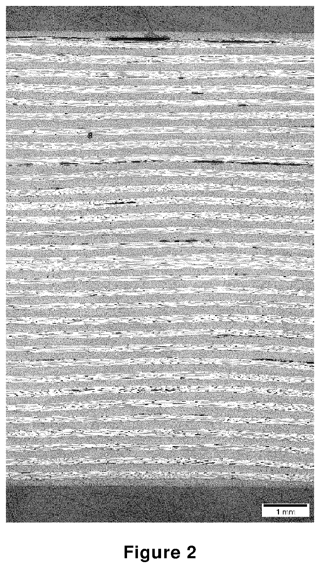

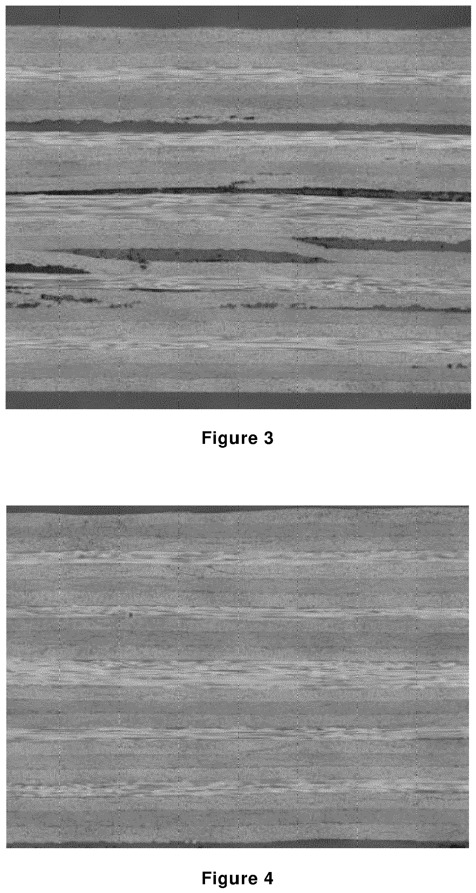

Laminate quality was evaluated by cross-sectional microscopy, shown in Figures 1 to 4 below for CE1, IE1, CE2 and IE2, respectively. Both comparative examples CE1 and CE2 show poor consolidation quality with large voids due to the high residual volatile content of the prepreg. IE1 shows improving consolidation quality with smaller and fewer voids and IE2 even shows no voids. This is due to the reduced volatile content of the prepreg, which is a direct result of the longer time spent for c1 for volatile removal during prepreg manufacturing.

**Claims**

1. A prepreg comprising fibers impregnated with a thermoplastic polymer, the prepreg **characterized by** a volatile content of 0.05% or less.

2. The prepreg according to claim 1, wherein the thermoplastic polymer is a polyaryletherketone, a polyphenylene sulfide, a polyethersulfone, a polycarbonate or a polyetherimide.

3. The prepreg according to claim 2, wherein the polyaryletherketone is selected from the group consisting of poly-ether-ketone, poly-ether-ether-ketone, poly-ether-ether-ketone-ketone, poly-ether-ether-ketone-ketone, poly-ether-ketone-ether-ketone-ketone, poly-ether-ether-ketone-ether-ketone, poly-ether-ether-ether-ketone, and poly-ether-diphenyl-ether-ketone, poly-ether-meta-ether-ketone, poly-ether-ortho-ether-ketone and mixtures thereof.

4. The prepreg according to any one of the preceding claims, wherein the fibers are carbon fibers, glass fibers, ceramic fibers, quartz or a mixture thereof.

5. The prepreg according to any one of the preceding claims, wherein the fibers are unidirectional fibers.

6. A process for producing a prepreg comprising the steps of:

   a) preparing a mixture of a thermoplastic polymer and a volatile compound,
   b) impregnating fibers with the mixture to form a prepreg,
   c) removing the volatile compound from the prepreg by

   c1) heating the prepreg and maintaining the temperature of the prepreg between a temperature T1 and temperature T2 for a time of at least 10 seconds, wherein T1 is the volatilization temperature of the volatile compound and T2 = Tm + 100 °C, wherein Tm is the melting temperature of the thermoplastic polymer, and either melting the thermoplastic polymer during step c1), or
   melting the thermoplastic polymer after step c1),
   c2) solidification of the thermoplastic polymer of the prepreg by cooling.

7. The process according to claim 6, wherein the thermoplastic polymer in step a) is present as particles.

8. The process according to claim 6 or 7, wherein the volatile compound comprises water.

9. The process according to any one of claims 6 to 8, wherein step c1) is conducted in an oven.

10. Process for consolidation of a stack of multiple prepreg plies into a composite laminate, wherein the prepreg is a prepreg according to any one of the preceding claims, the process comprising the steps of
a1) a dwell of the stack of prepreg plies at a pressure of 5 bar or below, at a temperature T1 between (Tm + 20 °C) < T1 < (Tm + 100 °C) for a duration of at least 5 min, wherein Tm is the melting temperature of the thermoplastic polymer of the prepreg.

11. The process according to claim 10, the process further comprising the step of
a0) a dwell of the stack of prepreg plies at a pressure of 5 bar or below at a temperature T2 between (Tm - 30 °C) < T2 < (Tm - 10 °C) for a duration of 60 min or less, wherein step a0) is conducted before step a1).

12. The process according to any one of claims 10 or 11, wherein the stack of multiple prepreg plies is prepared by manual deposition or automated deposition of prepreg plies.

13. The process according to any one of claims 10 to 12, wherein step a1) and/or step a0) are conducted in a vacuum bag.

14. Composite laminate obtained by a process according to any one of claims 10 to 13, **characterized by** a porosity of less than 2 % by volume measured according to ASTM D2734-16.

15. Use of a prepreg according to any one of claims 1 to 5 for lowering the void content in a composite laminate obtained by consolidation of the prepreg.

**Figure 1**

**Figure 2**

Figure 3

Figure 4

Europäisches
Patentamt

European
Patent Office

Office européen
des brevets

**EUROPEAN SEARCH REPORT**

Application Number

EP 21 18 1078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 412 742 A1 (TORAY INDUSTRIES [JP]) 1 February 2012 (2012-02-01) * abstract * * page 1, paragraph 1 * * page 4, paragraph 18 * * page 9, paragraph 72-73 * * page 10, paragraph 92 - page 11, paragraph 99 * * page 11, paragraph 97 * * page 15, paragraph 126; example 1 * * page 16, paragraph 130; example 22 * * claims 1-14 * | 1-15 | INV. C08J5/24 C08K5/06 B32B27/00 C08J5/04 B32B5/28 B32B5/26 |
| X | EP 1 724 306 A1 (TORAY INDUSTRIES [JP]) 22 November 2006 (2006-11-22) * abstract * * page 11, paragraph 69 * * page 13, paragraph 81 * * page 14, paragraph 85 - page 15, paragraph 99 * * page 7, paragraph 41 * * claims 1-28 * | 1-14 15 | |
| A | | | |
| X | EP 3 127 932 A1 (DAICEL CORP [JP]) 8 February 2017 (2017-02-08) * abstract * * page 33, paragraph 205 - page 34; claims 1-35 * * page 34, paragraph 212 - page 35, paragraph 215 * * page 42, paragraph 282 * * page 48, paragraph 322 * * claims 1-35 * | 1-15 | TECHNICAL FIELDS SEARCHED (IPC) C08J C08K C09J C08L B32B |

-/--

The present search report has been drawn up for all claims

| Place of search | Date of completion of the search | Examiner |
|---|---|---|
| Munich | 19 November 2021 | Schlembach, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 18 1078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 878 617 A1 (TORAY INDUSTRIES [JP]) 3 June 2015 (2015-06-03) <br> * abstract * <br> * page 21, paragraph 196 - page 22 * <br> * page 31, paragraph 272 * <br> * page 84, paragraph 767-768 * <br> * page 138, paragraph 912 - page 139 * <br> * page 139, paragraph 913-915 - page 143; example 69; table 12 * <br> * claims 1-47 * | 1-15 | |
| X | WO 2019/082672 A1 (DAINIPPON INK & CHEMICALS [JP]) 2 May 2019 (2019-05-02) <br> * page 14, paragraph 58 * <br> * page 14, paragraph 60-63 - page 15 * <br> * page 32, paragraph 166 * <br> * page 37, paragraph 186 - page 38 * <br> * claims 1-5 * | 1-15 | |
| X <br> A | WO 2018/131300 A1 (TORAY INDUSTRIES [JP]) 19 July 2018 (2018-07-19) <br> * page 11, paragraph 38 * <br> * page 16, paragraph 60 * <br> * page 22, paragraph 75 - page 24, paragraph 80 * <br> * page 13, paragraph 49 - page 14 * | 1-14 <br> 15 | **TECHNICAL FIELDS SEARCHED (IPC)** |

The present search report has been drawn up for all claims

| Place of search | Date of completion of the search | Examiner |
|---|---|---|
| Munich | 19 November 2021 | Schlembach, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 1078

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2021

| Patent document cited in search report | | Publication date | Patent family member(s) | | Publication date |
|---|---|---|---|---|---|
| EP 2412742 | A1 | 01-02-2012 | BR | PI1006218 A2 | 29-03-2016 |
| | | | CA | 2750631 A1 | 30-09-2010 |
| | | | CN | 102348735 A | 08-02-2012 |
| | | | EP | 2412742 A1 | 01-02-2012 |
| | | | ES | 2531305 T3 | 12-03-2015 |
| | | | JP | 4811532 B2 | 09-11-2011 |
| | | | JP | WO2010109929 A1 | 27-09-2012 |
| | | | KR | 20110113663 A | 17-10-2011 |
| | | | US | 2012035299 A1 | 09-02-2012 |
| | | | WO | 2010109929 A1 | 30-09-2010 |
| EP 1724306 | A1 | 22-11-2006 | AU | 2005217312 A1 | 09-09-2005 |
| | | | BR | PI0507208 A | 12-06-2007 |
| | | | CA | 2557572 A1 | 09-09-2005 |
| | | | EP | 1724306 A1 | 22-11-2006 |
| | | | JP | WO2005083002 A1 | 17-01-2008 |
| | | | KR | 20070009570 A | 18-01-2007 |
| | | | US | 2008160860 A1 | 03-07-2008 |
| | | | WO | 2005083002 A1 | 09-09-2005 |
| EP 3127932 | A1 | 08-02-2017 | EP | 3127932 A1 | 08-02-2017 |
| | | | JP | 6625969 B2 | 25-12-2019 |
| | | | JP | WO2015151348 A1 | 13-04-2017 |
| | | | TW | 201538568 A | 16-10-2015 |
| | | | US | 2017029557 A1 | 02-02-2017 |
| | | | WO | 2015151348 A1 | 08-10-2015 |
| EP 2878617 | A1 | 03-06-2015 | CN | 104487495 A | 01-04-2015 |
| | | | EP | 2878617 A1 | 03-06-2015 |
| | | | KR | 20150015552 A | 10-02-2015 |
| | | | US | 2015210813 A1 | 30-07-2015 |
| | | | US | 2017327657 A1 | 16-11-2017 |
| | | | US | 2019359785 A1 | 28-11-2019 |
| | | | WO | 2014017340 A1 | 30-01-2014 |
| WO 2019082672 | A1 | 02-05-2019 | JP | WO2019082672 A1 | 26-11-2020 |
| | | | TW | 201922863 A | 16-06-2019 |
| | | | WO | 2019082672 A1 | 02-05-2019 |
| WO 2018131300 | A1 | 19-07-2018 | JP | WO2018131300 A1 | 07-11-2019 |
| | | | WO | 2018131300 A1 | 19-07-2018 |

EPO FORM P0459

For more details about this annex : see Official Journal of the European Patent Office, No. 12/82